# EUROPÄISCHE PATENTSCHRIFT

(11) **EP 3 026 269 B1**
(45) Veröffentlichungstag und Bekanntmachung des Hinweises auf die Patenterteilung: **23.10.2019**
(21) Anmeldenummer: 15195310.6
(22) Anmeldetag: 19.11.2015
(51) Int. Cl.: F04D 29/049, F04D 29/046, F04D 7/02, F04D 13/06, F16C 33/66, F16C 33/62, F04D 13/02, H02K 5/173, H02K 7/14, F16C 33/32, F04D 1/06

(54) **ROTIERENDE PUMPE FÜR CRYOGENE FLÜSSIGKEITEN**
ROTARY PUMP FOR CRYOGENIC LIQUIDS
POMPE ROTATIVE POUR LIQUIDES CRYOGÉNIQUES

(30) Priorität: 26.11.2014 CH 18232014
(43) Veröffentlichungstag der Anmeldung: 01.06.2016
(73) Patentinhaber: Fives Cryomec AG, 4123 Allschwil (CH)
(72) Erfinder: Lewon, Ivan, 68640 Muespach (FR)
(74) Vertreter: Schneider Feldmann AG Patent- und Markenanwälte

(56) Entgegenhaltungen:
- EP-A1- 1 225 353
- WO-A1-99/58865
- CH-A5- 676 624
- CN-A- 102 562 813
- CN-U- 202 851 630
- DE-A1-102008 002 840
- JP-A- S56 138 491
- JP-A- S62 141 314
- JP-B2- 4 188 536
- US-A- 3 764 236
- Skf Group: "SKF solutions for pumps in extreme environments", , 1 September 2010 (2010-09-01), pages 1-6, XP055582825, Retrieved from the Internet: URL:https://www.skf.com/binary/21-294478/1 1079-EN---Special-pumps.pdf [retrieved on 2019-04-24]

## Beschreibung

Die Erfindung betrifft eine rotierende direktangetriebene ein- oder mehrstufige Pumpe mit Pumpenantrieb für cryogene Flüssigkeiten nach Patentanspruch 1.

Die Erfindung betrifft eine rotierende direktangetriebene ein- oder mehrstufige Pumpe mit Pumpenantrieb für cryogene Flüssigkeiten, mit einem Pumpengehäuse für die Pumpe und einem Motorgehäuse für den Antriebsmotor. Weil die Motorachse des elektrischen Antriebsmotors direkt und übersetzungslos in axialer Verlängerung mit der Pumpenachse der ein- oder mehrstufigen Pumpe verbunden ist, spricht man auch von einem Direktantrieb. Die Motorachse und die Pumpenachse sind dabei über eine Kupplung in einem Zwischenstück zwischen dem Pumpengehäuse und dem Motorgehäuse miteinander verbunden. Die Motorachse des Antriebsmotors ist zudem in mindestens zwei Lagern im Motorgehäuse gelagert. Im Kontext dieser Anmeldung wird abgekürzt auch der Begriff "Pumpe für cryogene Flüssigkeiten" verwendet, meint aber stets eine Kombination von Pumpe und Pumpenantrieb. Derartige Pumpen für cryogene Flüssigkeiten werden teilweise in horizontaler und teilweise in vertikaler Achsanordnung betrieben. Meist werden Pumpen dieser Art jedoch in vertikaler Anordnung verwendet, wobei der Antriebsmotor über der ein- oder mehrstufigen Pumpe angeordnet ist.

Die Anwendungsgebiete liegen häufig, aber nicht nur, im Bereich der Prozessverarbeitung und des Transports von flüssigen Gasen aus Luft. Spezielle Anforderungen ergeben sich, wenn stark verschmutzte cryogene Medien gefördert werden müssen. Die vorliegende Erfindung eignet sich speziell für den letztgenannten Bereich.

Pumpen für cryogene Flüssigkeiten haben bezüglich des Einsatzes von Materialien besondere Probleme. Diese ergeben sich einerseits aus dem Einsatz im Tieftemperaturbereich, andererseits aber auch aus den zu fördernden Medien selbst. Grundsätzlich versucht man deshalb in der Regel, den Pumpenbereich und den Motorenbereich so voneinander zu trennen, dass das zu fördernde cryogene Medium keine störende Wirkung auf die Funktion und die Zuverlässigkeit des Antriebsmotors hat. Dazu werden im Kupplungsbereich zwischen der Motorachse und der Pumpenachse Dichtungsmittel eingesetzt um ein Eindringen des cryogenen Mediums in den Motorraum zu verhindern. Bezüglich des cryogenen Mediums an sich sei an dieser Stelle lediglich darauf verwiesen, dass Pumpen für cryogene Flüssigkeiten beispielsweise für den Einsatz mit Flüssig-Sauerstoff speziell ausgerüstet sein müssen.

Im Bereich der Pumpen für cryogene Flüssigkeiten sind allerdings auch sogenannt "dichtungslose" Lösungen bekannt geworden, also Lösungen, bei denen die Dichtungsmittel zwischen dem Motor- und dem Pumpenraum lediglich dazu dienen, das Eindringen der cryogenen Flüssigkeit in den Lagerbereich zu vermindern. Ein Beispiel einer solchen Lösung ist beispielsweise die von der Firma Fives Cryogenie vertriebene "cryogenic vertical sealless motor pump". Es handelt sich dabei um eine Pumpe für cryogene Flüssigkeiten mit geschmierten Motorlagern, bei der der Antriebsmotor mit der einer kleinen Menge des zu fördernden cryogenen Mediums gekühlt wird. Dabei befindet sich das cryogene Medium im Motorgehäuse in der Gas-Phase und dieser Teilstrom wird letztlich auch wieder in den Hauptstrom des cryogenen Mediums zurückgeführt. Um die Trennung der Gas-Phase im Motorgehäuse von der Flüssig-Phase im Pumpengehäuse aufrecht zu erhalten, ist auf der Pumpenachse eine Labyrinthdichtung angebracht. Im Bereich des Zwischenstücks ist eine elektrische Heizung vorhanden, mit der einerseits eine optimale Betriebstemperatur für die Motorlager aufrechterhalten wird, die andererseits aber auch dazu dient, die Pumpe für cryogene Flüssigkeiten im Falle von längeren Standby-Zeiten auf einer Bereitschaftstemperatur zu halten. Pumpen dieser Art eignen sich auch für den Einsatz unter Extrembedingungen, wie etwa dem Einsatz bei gefährlichen Flüssiggasen, allerdings ist auch diese Pumpe für den Einsatz mit cryogenem Sauerstoff nicht geeignet.

Die Einflüsse eines cryogenen Mediums und insbesondere auch eines stark verschmutzten cryogenen Mediums auf geschmierte Motorlager sind an sich bekannt. Es hat sich gezeigt, dass gängige Schmiermittel in der Regel ziemlich rasch durch im Lagerbereich entstehende oder dort eindringende Dämpfe zumindest teilweise aufgelöst werden. Partikelverschmutzungen des cryogenen Mediums können zudem die eingesetzten Schmiermittel in eine Art unwirksamen Schlamm verwandeln. Diese Effekte zeigen sich grundsätzlich bei allen bekannten Schmiermitteln für Motorlager und sie zeigen sich im Laufe der Zeit selbst dann, wenn speziell abgedichtete geschmierte Lager verwendet werden.

JPS 56138491 A offenbart eine Pumpe gemäß dem Oberbegriff des Anspruchs 1.

Eine weitere Lösung ist aus der JP2014020491A bzw. der CN202851630U bekannt geworden. Es handelt sich dabei um eine Pumpe für Flüssiggase, deren Typ allerdings nicht spezifiziert ist, mit Schrägkugellagern (angularcontact ball bearings) für den Einsatz in ungeschmierten Verhältnissen. Bei dieser Lösung sind sowohl eine innerer wie auch ein äusserer Laufring des Kugellagers entweder aus rostfreiem Stahl, speziellem Werkzeugstahl, Lagerstahl oder karburiertem Stahl und zudem auch einer cryogenen Behandlung (cryogenic hardening) unterworfen. Die Rollkörper ihrerseits sind entweder aus den gleichen vorstehend genannten Materialien, die auch den gleichen cryogenen Behandlungen unterworfen wurden, oder sie bestehen aus Keramik. Prinzipiell erscheint dies als eine Lösung, bei der versucht wird, die Abrasionsfestigkeit der Lager zu erhöhen um dadurch auf den Einsatz von Schmiermitteln verzichten zu können. Speziell geeignete Materialpaarungen zur Erzielung besonders vorteilhafter Laufeigenschaften sind in dieser Schrift aber nicht offenbart. Hingegen weist die Beschreibung deutlichdarauf hin, dass bei Lagern dieser Art grosse Temperaturunterschiede auftreten können.

Es hat sich schliesslich gezeigt, dass Materialkombinationen aus Metall und Keramik in ungeschmierten Kugellagern in Pumpen für cryogene Flüssigkeiten oftmals keine genügende Ausfallsicherheit bieten, weil nämlich insbesondere die inneren Laufringe, wenn sie aus Keramik bestehen, bei einer Erwärmung der Motorwelle im Betrieb zerspringen können. Im Übrigen ist bekannt, dass die in der JP2014020491A erwähnten Metallkombinationen keine besonders herausragenden Gleiteigenschaften besitzen, weshalb unter Umständen sehr wohl unzulässige Erwärmungen infolge Reibung im Lagerbereich entstehen können. Es gibt deshalb - besonders im Hinblick auf einen Einsatz mit stark verschmutzten cryogenen Medien und der dadurch erhöhten Wahrscheinlichkeit von unerwünschter Abrasion und unerwünschten Erwärmungen - begründete Vorbehalte gegen den Einsatz einer Mischung von Materialien aus Metall und Keramik im Bereich der Motorlager, so wie sie in der JP2014020491A vorgesehen sind.

Es ist deshalb die Aufgabe der Erfindung, eine rotierende direktangetriebene ein- oder mehrstufige Pumpe mit Pumpenantrieb für cryogene Flüssigkeiten anzugeben, die einen möglichst einfachen Aufbau hat und bei der die reibungsbedingte Erwärmungen an den Motorlagern so weit wie möglich reduziert sind.

Eine weitere Aufgabe besteht darin, die Störungsanfälligkeit der Motorlager zu reduzieren und selbst bei stark verschmutzten cryogenen Medien eine hohe Ausfallsicherheit zu gewährleisten.

Diese Aufgaben werden durch die Merkmalskombination des Patentanspruchs 1 gelöst.

Die Lösung besteht darin, dass bei einer gattungsgemässen Pumpe für cryogene Flüssigkeiten die zwei Lager der Motorachse des Antriebsmotors ungeschmierte Lager sind, die innere und äussere Laufringe mit Laufflächen aufweisen, zwischen denen keramische Rollkörper angeordnet sind, wobei die Laufflächen eine chrom-basierte Beschichtung aufweisen.

Ein Vorteil dieser Lösung besteht darin, dass durch den Einsatz chrom-basierter Laufflächen-Beschichtungen in den Motorlagern eine so starke Reduktion der Reibung erzielt wird, dass auch ungeschmierte Motorlager eingesetzt werden können. Das vereinfacht natürlich den Aufbau der Pumpe für cryogene Flüssigkeiten und der Wegfall der kritischen reibungsbedingten Erwärmungen an den Motorlagern sorgt auch dafür, dass die Gefahr von Achslagerbrüchen stark reduziert ist. Letzteres ist natürlich besonders dann relevant, wenn in den Motorlagern Materialkombinationen aus Metall und Keramik verwendet werden, da sich bekanntlich die Wärmedehnungskoeffizienten dieser Materialien meist stark unterscheiden. Pumpen für cryogene Medien mit ungeschmierten Lagern ermöglichen zudem auch "dichtungslose" Ausführungen in dem Sinne, dass es Achsabdichtung an der Motorachse oder an der Pumpenachse zwischen dem Motorgehäuse und dem Pumpengehäuse nicht mehr zwingend braucht, weil nicht mehr vollständig verhindert werden muss, dass die Motorlager dem kryogenen Medium ausgesetzt sind. Auch dies bedeutet natürlich eine wesentliche Konstruktionsvereinfachung.

Weitere Vorteile der vorgeschlagenen Lösung bestehen darin, dass störende oder sogar schädliche Streu- und Kriechströme durch die Lager vermieden werden, weil die keramischen Rollkörper natürlich isolierend wirken. Bei keramischen Rollkörpern können jedoch Potentialdifferenzen zwischen dem Rotor und dem Stator auftreten, was zu Funkenbildung im cryogenen Medium führen könnte. Um jegliche Funkenbildung in dem zu fördernden cryogenen Medium zuverlässig zu vermeiden, müssen Erdungsmittel vorhanden sein. Derartige Mittel sind an sich bekannt, jedoch nicht Gegenstand dieser Anmeldung.

Die erwähnte starke Reduktion der Reibung in den Motorlagern lässt sich sogar noch weiter vermindern wenn zu der vorhandenen chrom-basierten Beschichtung der Laufflächen in den Motorenlagern zusätzlich noch eine weitere dünne Oberflächenschicht aus Wolframsulfid (WS₂) eingesetzt wird.

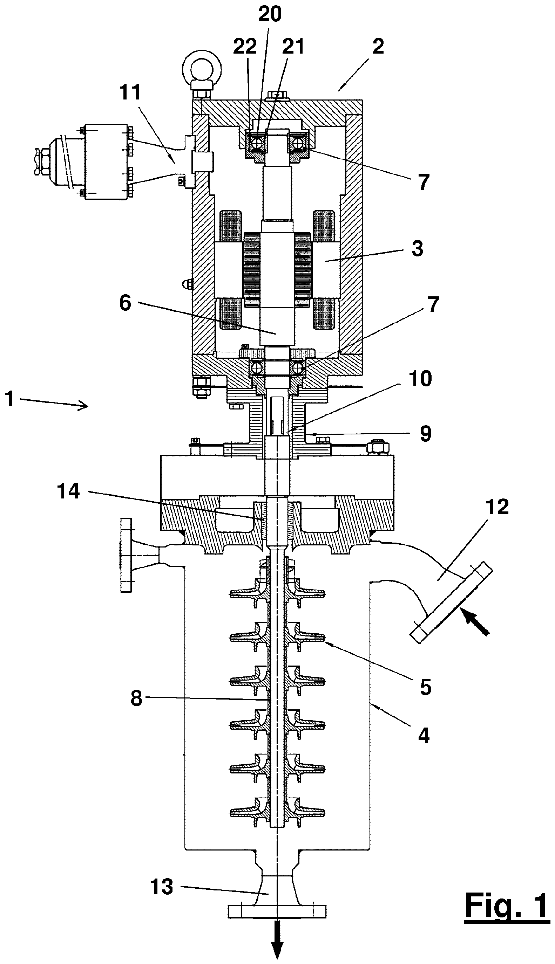

Im Weiteren wird ein Ausführungsbeispiel der Erfindung anhand einer Zeichnung näher erläutert. Dabei zeigt
- Fig. 1: einen vereinfachten Querschnitt durch eine erfindungsgemässe Pumpe für cryogene Flüssigkeiten.

Die Figur 1 zeigt schematisch einen Querschnitt durch eine erfindungsgemässe direktangetriebene mehrstufige Pumpe 1 für cryogene Flüssigkeiten. Die Pumpe 1 hat ein Motorgehäuse 2 für einen elektrischen Antriebsmotor 3 sowie ein Pumpengehäuse 4 für eine Pumpe 5. Die Pumpe 5 ist im vorliegenden Ausführungsbeispiel eine mehrstufige Impeller-Pumpe, es kann aber auch lediglich eine einstufige Impeller-Pumpe vorgesehen sein. Der Antriebsmotor 3 hat eine Motorachse 6 die in zwei Lagern 7 im Motorgehäuse 2 gelagert ist. Die Pumpe 5 hat eine Pumpenachse 8. Die Motorachse 6 des elektrischen Antriebsmotors 3 ist direkt und übersetzungslos in axialer Verlängerung mit der Pumpenachse 8 der ein- oder mehrstufigen Pumpe 5 verbunden. Die Pumpe 5 ist somit direkt angetrieben.

Zwischen dem Motorgehäuse 2 und dem Pumpengehäuse 4 befindet sich ein Zwischenstück 9. Das Zwischenstück 9 hat Adapter- und Trennfunktionen. Im Zwischenstück 9 befindet sich eine Kupplung 10, mit der die Motorachse 6 des Antriebsmotors 3 mit der Pumpenachse 8 der mehrstufigen Pumpe 5 drehfest verbunden ist.

Weiter ersichtlich sind noch ein elektrischer Anschluss 11 am Motorgehäuse sowie ein Saugflansch 12 für die Ansaugung des cryogenen Mediums und ein Auslassflansch 13 für den Ausstoss des cryogenen Mediums am Pumpengehäuse 4.

Weiterhin ersichtlich ist ein Lager mit Labyrinthdichtung 14 im Pumpengehäuse 4 in dem die Pumpenachse 8 einseitig gelagert ist, vorhanden ist. Das Lager mit Labyrinthdichtung 14 ist aber nicht dazu konzipiert, eine vollständige Trennung in dem Sinne zu erreichen, dass das cryogene Medium keinen Zutritt via die Kupplung 10 in das Motorgehäuse 2 erhält. Wegen der speziellen (nachstehend beschriebenen) Konstruktion der Lager 7 ist dies nicht notwendig.

Die zwei Lager 7 der Motorachse 6 sind ungeschmierte Lager, also Trockenlager. Die Lager 7 sind grundsätzlich Lager mit Rollkörpern 20 sowie inneren und äusseren Laufringen 21, 22 mit Laufflächen, zwischen denen die Rollkörper 20 angeordnet sind. Hier handelt es sich um an sich bekannte keramische Rollkörper 20. Die Laufflächen ihrerseits weisen eine chrom-basierte Beschichtung auf.

Es wird vorgeschlagen für die Laufflächen der Laufringe 21, 22 eine chrom-basierte reibungsarme Beschichtung zu verwenden, die eine Schichtdicke von < 0.01 mm und einen Chrom-Anteil von > 98% aufweisen. Andere, aber grundsätzlich ähnliche chrom-basierte reibungsarme Beschichtungen mit anderen Schichtdicken, verschiedenem Schichtaufbau, ähnlichen Chrom-Anteilen und möglicherweise verschieden Restanteilen anderer Metalle sind natürlich ebenfalls möglich, im gegenwärtigen Entwicklungsstand aber noch wenig erprobt. Die vorgeschlagene Dicke und Zusammensetzung hat in Versuchen bereits gute Ergebnisse erbracht. Dünn-Chrom-Beschichtungen dieser Art sind grundsätzlich nicht nur hart, sie haben auch einen sehr niedrigen Reibungskoeffizienten und sie eignen sich für cryogene Anwendungen, zumindest sind schon Kolbenpumpen mit chrom-haltigen Beschichtungen im Pumpenkolbenbereich vorgeschlagen worden.

Die sehr niedrigen Reibungskoeffizienten der chrom-basierten Beschichtungen bewirken, dass sich im Betrieb der Pumpe 1 nur sehr wenig Reibungswärme entwickelt. Deshalb sind auch Materialpaarungen mit keramischen Rollkörpern 20 möglich, weil nämlich die durch Reibungswärme bedingten Temperaturdifferenzen und damit auch die unterschiedlichen Materialausdehnungen im Bereich der keramischen Rollkörper 20 und der Laufringe 21, 22 gering bleiben. Die Bruchgefahr infolge thermischer Spannungen, insbesondere im Fall von keramischen Laufringen, ist stark reduziert. Weil bezüglich Gleitfähigkeit zumindest gleich gute Werte wie bei geschmierten Lagern erreicht werden, kann auch auf den Einsatz geschmierter Lager verzichtet werden. Ein Eindringen der cryogenen Flüssigkeit in den Lagerbereich muss nicht verhindert werden.

Zur weiteren Verringerung der Reibung zwischen den keramischen Rollkörpern 20 und den Laufringen 21, 22 kann auf der chrom-basierten Beschichtung zusätzlich eine Oberflächenbeschichtung aus Wolframsulfid (WS₂) mit einer Schichtdicke im Bereich von 5µm vorgesehen sein.

### Bezugsziffernliste:

- 1: Pumpe für cryogene Flüssigkeiten
- 2: Motorgehäuse
- 3: Antriebsmotor
- 4: Pumpengehäuse
- 5: Pumpe
- 6: Motorachse
- 7: Lager
- 8: Pumpenachse
- 9: Zwischenstück
- 10: Kupplung
- 11: Elektrischer Anschluss
- 12: Saugflansch
- 13: Auslassflansch
- 14: Lager mit Labyrithdichtung

- 20: Rollkörper
- 21: innerer Laufring
- 22: äusserer Laufring

## Patentansprüche

1. Rotierende direktangetriebene ein- oder mehrstufige Pumpe (5) mit Pumpenantrieb für cryogene Flüssigkeiten, mit einem Pumpengehäuse (4) für die Pumpe, einem elektrischen Antriebsmotor (3) in einem Motorgehäuse (2) als Pumpenantrieb und einem eine Kupplung (10) enthaltenden Zwischenstück (9) zwischen dem Pumpengehäuse (4) und dem Motorgehäuse (2), wobei eine Motorachse (6) des Antriebsmotors (3) über die Kupplung (10) mit einer Pumpenachse (8) der ein- oder mehrstufigen Pumpe (5) verbunden ist und wobei die Motorachse (6) des Antriebsmotors (3) in zwei Lagern (7) im Motorgehäuse (2) gelagert sind, wobei die zwei Lager (7) ungeschmierte Lager sind, **dadurch gekennzeichnet, dass** die zwei Lager (7) innere und äussere Laufringe (21,22) mit Laufflächen aufweisen, zwischen denen keramische Rollkörper (20) angeordnet sind, wobei die Laufflächen eine chrom-basierte Beschichtung aufweisen.

2. Pumpe mit Pumpenantrieb nach Patentanspruch 1, **dadurch gekennzeichnet, dass** die direktangetriebene ein- oder mehrstufige Pumpe (5) eine Vertikalpumpe ist.

3. Pumpe mit Pumpenantrieb nach Patentanspruch 1 oder 2, **dadurch gekennzeichnet, dass** die direktangetriebene ein- oder mehrstufige Pumpe (5) eine "dichtungslose" Pumpe in dem Sinne ist, dass es ein Lager mit Labyrinthdichtung (14) an der Motorachse (6) oder an der Pumpenachse (8) zwischen dem Motorgehäuse (2) und dem Pumpengehäuse (4) oder in einem derselben gibt um ein Eindringen der cryogenen Flüssigkeit in den Lagerbereich zu vermindern.

4. Pumpe mit Pumpenantrieb nach einem der Patentansprüche 1 bis 3, **dadurch gekennzeichnet, dass** die chrom-basierte Beschichtung eine Schichtdicke von < 0.01 mm aufweist.

5. Pumpe mit Pumpenantrieb nach Patentanspruch 4, **dadurch gekennzeichnet, dass** die chrom-basierte Beschichtung eine zusätzliche Oberflächenbeschichtung aus WS₂ mit einer Schichtdicke im Bereich von 5µm aufweist.

## Claims

1. Rotating, directly-driven, single or multistage pump (5) with a pump driver for cryogenic liquids, with a pump housing (4) for the pump, an electric drive motor (3) in a motor housing (2) as the pump drive and an intermediate piece (9), containing a coupling (10), between the pump housing (4) and the motor housing (2), wherein a motor axle (6) of the drive motor (3) is connected via the coupling (10) to a pump axle (8) of the single or multistage pump (5) and wherein the motor axle (6) of the drive motor (3) is borne in two bearings (7) in the motor housing (2),
wherein the two bearings (7) are unlubricated bearings, **characterised in that** the two bearings (7) comprise inner and outer races (21, 22) with race surfaces between which ceramic rolling elements (20) are arranged, wherein the race surfaces have a chromium-based coating.

2. Pump with a pump drive according to claim 1 **characterised in that** the directly-driven, single or multistage pump (5) is a vertical pump.

3. Pump with a pump drive according to claim 1 **characterised in that** the directly driven, single or multistage pump (5) is a "sealless" pump in the sense that there is a bearing with a labyrinth seal (14) on the motor axle (6) or on or in the pump axle (8) between the motor housing (2) and the pump housing (4) to prevent the penetration of the cryogenic liquid into the bearing area.

4. Pump with a pump drive according to any one of claims 1 to 3 **characterised in that** the chromium-bases coating has a layer thickness of < 0.01 mm.

5. Pump with a pump drive according to claim 4 **characterised in that** the chromium-based coating has an additional surface coating of WS₂ with a layer thickness in the region of 5 pm.

## Revendications

1. Pompe (5) mono-étagée ou multi-étagée à entraînement direct, pourvue d'un entraînement de pompe pour des liquides, destinée à des liquides cryogéniques, pourvue d'un carter de pompe (4) pour la pompe, d'un moteur d'entraînement électrique (3) dans un carter de moteur (2) en tant qu'entraînement de pompe et d'une pièce intermédiaire (9) contenant un accouplement (10) entre le carter de pompe (4) et le carter de moteur (2), un axe de moteur (6) du moteur d'entraînement (3) étant relié par l'intermédiaire de l'accouplement (10) avec un axe de pompe (8) de la pompe (5) mono-étagée ou multi-étagée et l'axe de moteur (6) du moteur d'entraînement (3) étant logé dans deux paliers (7) dans le carter de moteur (2), les deux paliers (7) étant des paliers non lubrifiés, **caractérisée en ce que** les deux paliers (7) comportent des bagues de roulement (21, 22) intérieure et extérieure, pourvues de surfaces de roulement, entre lesquelles sont placés des corps de roulement (20) céramiques, les surfaces de roulement comportant un revêtement à base de chrome.

2. Pompe pourvue d'un entraînement de pompe selon la revendication 1, **caractérisée en ce que** la pompe (5) mono-étagée ou multi-étagée à entraînement direct est une pompe verticale.

3. Pompe pourvue d'un entraînement de pompe selon la revendication 1 ou 2, **caractérisée en ce que** la pompe (5) mono-étagée ou multi-étagée à entraînement direct est une pompe « sans joint » dans le sens qu'il existe un palier pourvu d'un joint labyrinthe (14) sur l'axe de moteur (6) ou sur l'axe de pompe (8) entre le carter de moteur (2) et le carter de pompe (4) ou dans l'un de ces derniers, pour réduire une pénétration du liquide cryogénique dans la zone du palier.

4. Pompe pourvue d'un entraînement de pompe selon l'une quelconque des revendications 1 à 3, **caractérisée en ce que** le revêtement à base de chrome présente une épaisseur de couche < 0.01 mm.

5. Pompe pourvue d'un entraînement de pompe selon la revendication 4, **caractérisée en ce que** le revêtement à base de chrome comporte un revêtement de surface additionnel en WS₂ d'une épaisseur de couche de l'ordre de 5 pm.
